Europäisches Patentamt

European Patent Office

Office européen des brevets

(19)

(11) **EP 0 936 630 A1**

(12) **EUROPEAN PATENT APPLICATION**

(43) Date of publication:
**18.08.1999 Bulletin 1999/33**

(51) Int. Cl.⁶: **G21C 17/07**

(21) Application number: **99101619.7**

(22) Date of filing: **03.02.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **10.02.1998 US 21470**

(71) Applicant:
**Siemens Power Corporation
Richland, WA 99352-0130 (US)**

(72) Inventor: **McClelland, Richard G.
Richland, WA 99352 (US)**

(74) Representative:
**Kahlhöfer, Hermann, Dipl.-Phys. et al
Patent- und Rechtsanwälte,
Bardehle,Pagenberg,Dost,Altenburg,Geissler,Is
enbruck
Uerdinger Str. 5
40474 Düsseldorf (DE)**

(54) **Detection of nuclear fuel rod failure**

(57) Method and apparatus for ultrasonic inspection of a nuclear fuel rod having an inner core of nuclear fuel surrounded by a cladding tube having a wall thickness into which is transmitted ultrasonic guided waves which leak into the interior of the fuel rod and from which is detected a reflected ultrasonic wave which is indicative of a failed fuel rod.

FIG. 1

EP 0 936 630 A1

## Description

### Field Of The Invention

The present invention relates to the inspection of nuclear reactor fuel rods having a breach through its cladding wall, and more particularly to a method for ultrasonic inspection to detect water or other compressible fluid in the fuel rod evidencing a failure of the fuel rod cladding tube.

### Background Of The Invention

The majority of nuclear power reactors are water cooled and moderated reactors, utilizing enriched uranium dioxide as fuel. The core of the reactor is formed by elongated fuel rods which are grouped into bundles known as fuel assemblies which are generally rectangular in cross section. The fuel rods have diameters usually in the range of one fourth to one half inch and are frequently longer than ten feet. Each fuel rod is formed of a cladding tube typically made of a zirconium alloy which surrounds an inner core of nuclear fuel, typically uranium dioxide. Most commonly, the uranium dioxide is in the form of pellets which are placed within the cladding. The fuel rods are held in a parallel array and in closely spaced fixed positions from each other by spacer grids. Spacers grids typically have an egg-crate shape and each spacer cell includes dimples and/or springs to position a fuel rod so that the desired fuel rod to fuel rod spacing (i.e. fuel rod pitch) is maintained. The springs and dimples keep the fuel rods in their proper lateral positions. But, under the influence of radiation, the springs are prone to relax which can lead to undesirable changes in fuel rod pitch or it may cause gaps or spaces to develop between fuel rods and the springs and dimples which increases the likelihood that the rods and/or spacer grids will vibrate due to coolant flow. Such gaps, changes in fuel rod pitch, and vibration may lead to fuel rod wear commonly known as fuel rod fretting from spacer grid interaction, and can ultimately lead to a breach or a hole through the wall of the fuel cladding tube which encloses the enriched uranium dioxide. Such a breach or hole results in the fuel rod failure. The abrasion occurs at the contact point within the spacer between the spacer spring and the fuel rod for each spacer within the fuel assembly. Although all fuel rods in an assembly are susceptible to this type of abrasion, damage is most common in the fuel rods at the lowest spacer region.

During the operation of the reactor, holes may develop in the cladding due to stress, corrosion, debris, defective welding, or from fuel rod fretting typically caused by repeated relative movement of the spacer in contact with the fuel rod. If the repeated wear from fuel rod fretting or other cause ultimately produces a hole through the wall of the fuel rod cladding, fission gases will escape through the hole in the cladding tube into the reactor coolant water, and reactor coolant water will enter into the fuel rod. Such a fuel rod is characterized as a failed fuel rod. The amount and level of water in the fuel rod alter operation is dependent on the size and location of the hole, and the operating power history of the rod. Most fuel rods fail in the lower portion of the rod, due to spacer fretting, debris fretting, or failed lower end cap welds. Therefore, due to defect location and gravity, the most likely location to detect water within the fuel rod is just above the lowest spacer.

After a fuel assembly has been exposed in the reactor for a given period of time, it is typically taken out, checked for failure and defects, repaired if necessary, and either returned to the reactor or sent to storage for ultimate disposition. If the fuel assembly is to be returned to the reactor, it is typically tested and checked for defective and failed fuel rods. These irradiated assemblies are highly radioactive and must be stored, handled, and inspected under water in order to remove heat caused by the decay of fission products as well as to provide protection to persons working with them.

Testing of a fuel assembly for failed nuclear fuel rods is normally performed by either ultrasonic methods or sipping. In sipping, the method detects fission gases being released from a failed fuel assembly. Since sipping cannot indicate which rod has failed, such a determination must made by using eddy current testing, ultrasonics, or visual inspection. In ultrasonic testing, the presence of water in a fuel rod indicates a breach or a hole in the fuel rod cladding and failure of the fuel rod. In one method, water is detected by measuring the difference in attenuation of the ultrasonic energy returned from a water (failed rod) or gas (sound rod) interface of the fuel rod cladding interior wall. An example of this approach is set forth in U. S. Patent 4,879,088 assigned to the same assignee as the present invention.

0 According to the approach of U.S. Pat. No. 4,897,088, a transducer is caused to traverse a nuclear fuel assembly during which a series of ultrasonic pulses is emitted from the transducer in the form of a beam. When the beam strikes a fuel rod, it is reflected from the outer surface. If the beam is normal to the surface, it will be reflected back into the transducer to a maximum extent which will give rise to an electrical signal ("pulse-echo" technique). Part of the ultrasonic energy penetrates the cladding but the normal rod does not pass ultrasonic energy to the interior of the fuel rod (the internal gas and uranium dioxide are nonconductive) resulting in "wall ringing" between the inner and outer walls of the fuel rod cladding. The wall ringing is recorded. If the rod is filled with water, there will be a transfer of the ultrasonic energy from the fuel rod cladding tubing wall into the water where it is effectively dispersed. This greatly attenuates the wall ringing. This will occur whether uranium dioxide is present or not. The attenuation factor of the wall ringing identifies a defective fuel rod.

In another method which is disclosed in U.S.

Patent 4,313,791, a transducer emitting ultrasonic signals is placed against a fuel rod and an ultrasonic beam is transmitted into the rod by the transducer. The test is performed at the lower plenum of the fuel rod, a portion of the fuel rod which does not contain uranium dioxide. An analysis of the waves received by a pulse-echo system, reveals whether or not this portion of the rod is filled with water.

U.S. Patent 4,126,514 discloses a method for detecting defective fuel elements by isolating from contact the exterior surface of a fuel element cladding from the cooling liquid normally employed and then making a pulsed echo attenuation measurement to identify the presence of excessively swollen fuel pellets. The measure of the presence of either cooling liquid within the element or a number of swollen fuel pellets is achieved by appropriate interpretation of echo pulses.

U.S. Patent No. 3,350,271 discloses a transducer which contains a liquid such that heat transfer to the transducer heats the liquid. Under normal operating conditions, the pressure maintains the liquid as a liquid. Boiling of the liquid in the transducer, detected ultrasonically, could be used as an indication of the attainment of a predetermined pressure. Should there be a leak in the fuel rod, there would be a drop in pressure and, thus, the liquid would vaporize and expand through an orifice to indicate that a leak has occurred.

U.S. Patent 4,009,616 is directed to an acoustic method for measuring gas pressure in a hermetically sealed enclosure. This is done by determining the velocity change and attenuation of an ultrasonic signal caused by the internal gas pressure within the fuel rod. This process requires that the signal be transmitted through the gas and the effects of the signal received through the cladding be minimized.

The prior art failed fuel detection systems which utilize ultrasonics to detect water in the fuel rod as an indication of a breached cladding, measure the difference in amplitude of an ultrasonic signal reflected from the cladding internal diameter. The difference in acoustic impedance between "air" and water in the inside causes the signal to be reduced in amplitude if water is present. The major difference between the prior art methods is how the signal is injected into the fuel rod. Some use pitch-catch, the transmitting and receiving transducers are different, and the signal is propagated circumferentially around the fuel rod in a narrow band. Some use pulse-echo, in which the transmitting and receiving transducers are the same and their signal is propagated in a narrow band completely around the fuel rod. In either case, the inspected area is very small, usually no more than the circumferential band around the fuel rod extending 0.1 inch axially. Thus, the prior art ultrasonic inspection techniques and methods to inspect for the presence of water within the fuel rod to determine if it has failed by testing a very narrow area of cladding, from 0.060 to 0.100 square inches. Because of such limited volume of acoustic interrogation of the prior art ultrasonic inspection methods, repeated testing over the entire portion of the axial height of the fuel rod where water may be present is not performed. Accordingly, the detection capability as well as the accuracy of the prior art ultrasonic methods is poor resulting in a high percentage of erroneous determinations of passed fuel rods. If there is no water at the specific location of inspection, the ultrasonic method will not detect any failure in a failed fuel rod.

There therefore exists a need for an inspection method which overcomes the above-stated disadvantages and which enables the rapid and efficient inspection of fuel rod cladding tubes of fuel rods within a fuel assembly to identify whether there has been a breach in any fuel rod, which frequently occurs at the spacer grid-to-fuel rod contact points, without the need to disassemble the fuel assembly in order to obtain access to the fuel rods.

## Summary of the Invention

In an embodiment of the present invention, a method is provided for ultrasonic inspection of a nuclear fuel rod in a nuclear fuel assembly having an array of spaced apart parallel nuclear fuel rods immersed in a compressible fluid, the nuclear fuel rod having a cladding tube surrounding an inner core of nuclear fuel, the cladding tube having an inner wall, comprising the steps of transmitting ultrasonic guided waves in the cladding tube and detecting a reflected ultrasonic wave from the cladding tube which reflected ultrasonic wave is indicative of the presence of water in the fuel rod which represents a breach in the integrity of the wall of the cladding tube.

## Brief Description of the Drawings

Figure 1 depicts the excitation of guided waves using an oblique incidence, longitudinal wave transducer on a plexiglass wedge;

Figure 2 depicts phase velocity dispersion curve for zircaloy tubing;

Figure 3 depicts group velocity dispersion curve for zircaloy tubing;

Figure 4A is a graphical representation of the phase velocity excitation zone when guided waves are induced by oblique incidence, longitudinal wave excitation;

Figure 4B is a graphical representation of the phase velocity excitation zone when guided waves are induced by a periodic distribution of normal excitations with the spatial period equaling the wavelength of the excited mode, the "comb" method;

Figure 5 depicts the comb type excitation and the relationship between spatial period and wavelength;

Figure 6 shows the experimental testing results of a segment of a cladding tube having water in its interior;

Figures 7-26 shows the experimental testing results of a segment of other cladding tubes having water in their interior; and

## Detailed Description

The present invention provides a method which permits the rapid inspection and testing of nuclear fuel rods within BWR (boiling water reactor) and PWR (pressurized water reactor) fuel assemblies to detect failure of the cladding tubes of nuclear fuel rods indicated by the presence of water and caused by debris trapped within a spacer as well as by spacer fretting induced by coolant flow. The present invention permits rapid testing of all fuel rods in an assembly without removing rods for individual inspection.

In accordance with the present invention, a method is provided for ultrasonic inspection of a nuclear fuel rod in a nuclear fuel assembly having an array of spaced apart parallel nuclear fuel rods immersed in a compressible fluid, the nuclear fuel rod having a cladding tube surrounding an inner core of nuclear fuel, the cladding tube having an inner wall, comprising the steps of transmitting ultrasonic guided waves in the cladding tube which leaks from the inner wall of the cladding tube into the inner core and detecting a reflected ultrasonic wave from the cladding tube which reflected ultrasonic wave is indicative of the presence of water in the fuel rod and represents a breach in the integrity of the wall of the cladding tube.

A guided wave is an ultrasonic wave induced in a thin walled object with such properties that permit the wave to stay within the boundaries of the material with little or no leakage to either surface. Guided waves can be induced in thin plate as well as in thin walled tubing. The production of guided waves in an object is controlled by the proper selection of transducer frequency, transducer incidence angle, test object material velocity, and material wall thickness. Since the wave is attenuated only by the material impedance, the waves can travel long distances with little attenuation.

There are several ways of inducing guided waves in an object. The two most used are oblique incidence angle transducer and specially designed transducers such as a "comb" transducer. In the first, a standard transducer is positioned at a predetermined angle to the test object and a wave injected. Since the transducer element is not in contact with the test object due to the incidence angle, a conducting medium such as plastic or water must be added to transfer the sound from the transducer element to the test object. This greatly increases the thickness of the transducer and effectively precludes its use within a fuel assembly because of the narrow rod to rod, and rod to guide tube gaps which are further discussed below.

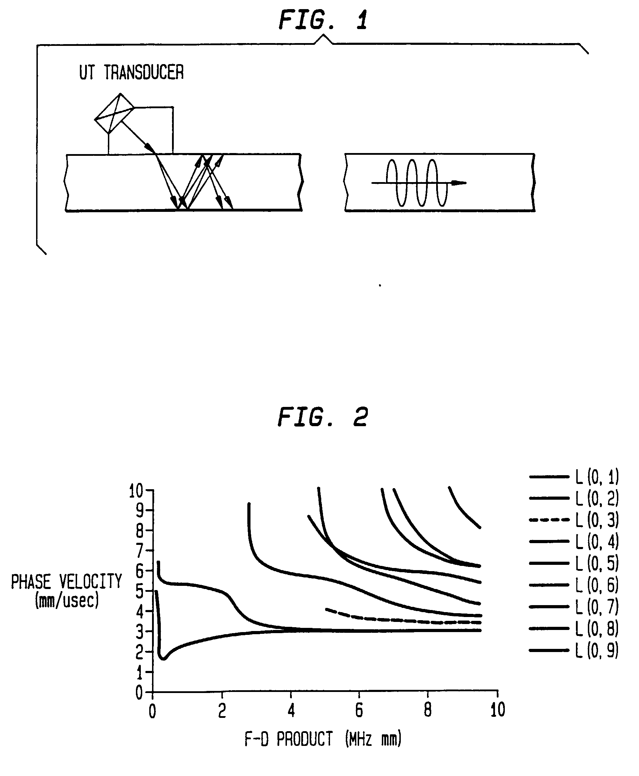

Referring to Figure 1, depicting the generation of a guided wave at an oblique incidence in a thin wall tube using a longitudinal wave transducer on an acoustic coupling material such as plastic. The longitudinal wave is incident at some incident angle $\Theta$, and velocity $V_{plexi}$. Due to Snell's law, the waves undergo mode conversion, reflection and refraction at the interfaces. At some distance away from the transducer, the waves will no longer be individually identifiable, but will superimpose into a wave packet.

For certain cases of incident angle, thickness, and material properties, constructive interference will take place, and a guided wave will propagate in the tube or plate. These conditions for constructive interference are met for many combinations of thickness, angle, and material properties. The combinations which result in constructive interference are termed modes. Each mode has its own characteristics of wave structure, propagation velocity, and stress distribution. In particular, each mode has an in plane and out of plane displacement at the wave guide surface. The amount of out of plane displacement dictates how "leaky" the mode will be since the out of plane displacement causes the generation of longitudinal waves out of the material and which carry energy out of the wave guide. This feature is particularly important in the application where the fuel rod has failed because a failed fuel rod tube will have water within it. Thus, for a failed or breached fuel rod, the selection of a leaky mode to the inner surface of the cladding tube will enable the detection of such failure since water will rapidly attenuate the sound field which is indicative of the presence of water. It is necessary to choose a non-leaky mode to both the inner and outer surface of the cladding tube for the inspection of a fuel rod which does not have a breached cladding tube.

The theoretical modeling of guided wave propagation results in dispersion curves and wave structure diagrams that describe the wave propagation. The phase velocity dispersion curve shown in Figure 2 is typically used for generation criterion for guided 0 waves. In the case of oblique incidence generation, the phase velocity is simply related to angle of incidence by Snell's law:

$$\frac{Sin\theta_i}{V_{Plexi}} = \frac{Sin90}{V_{Phase}}.$$

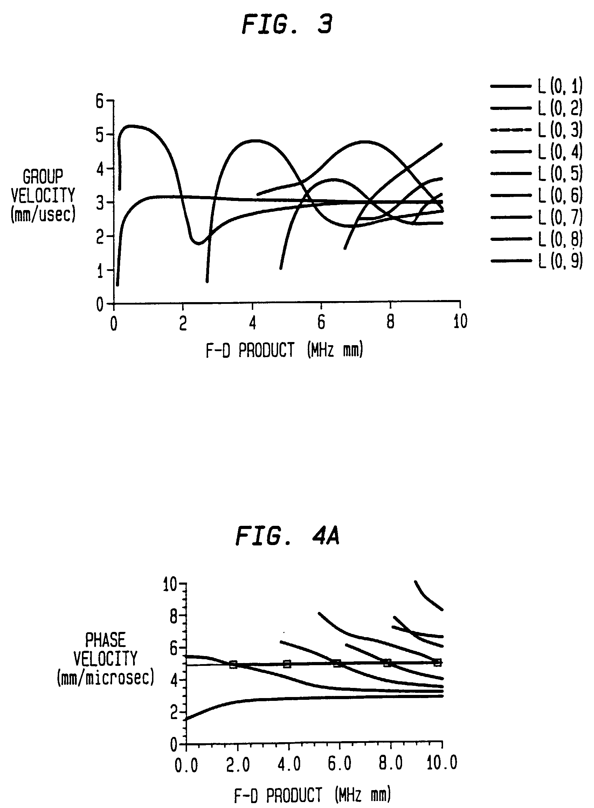

The group velocity dispersion curve is shown in Figure 3 and provides the propagation velocity of the generated guided waves modes.

As stated above, inducing guided waves by oblique incidence, longitudinal wave excitation is accomplished by coupling a longitudinal wave transducer to a fuel rod cladding tube at an incident angle through the use of a plastic wedge. A specific phase velocity is generated which is governed by Snell's Law for the plastic wedge. Therefore, modes can be generated which intercept the particular phase velocity excitation zone. Figure 4A shows the excitation zone for this method.

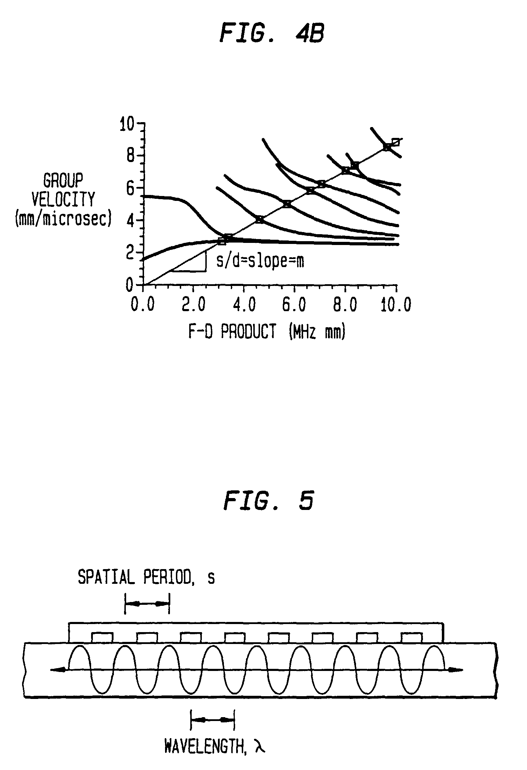

A second way of inducing guided waves in an object is the "comb" method. A comb transducer is a contact type transducer for producing guided waves and whose characteristics are determined by the spacing and thickness of the comb elements. In this method, excitation is accomplished by a periodic distribution of normal excitations with the spatial period equaling the wavelength of the excited mode (Figure 5). Instead of a horizontal excitation region as in the oblique incidence method (Fig. 4A), the excitation is in the form of a straight line passing through the origin (Fig. 4B). The equation of the line is of the form $y=mx$, where $y=V_{phase}$, $x=fd$, and $m=s/d$ and where

$$V_{phase} = f\lambda = fs = \frac{s}{d}fd,$$

and s is the comb spacing. Figure 4B is a graphical representation of the phase velocity excitation zone for this method.

Although either method of generation can be used for flaw detection such as in the detection of failure of the cladding tube by a breach, or fretting, wear or defects, because comb transducers can be manufactured with a lower profile design, they provide means for obtaining access into the fuel assembly between the narrow spaces between fuel rods for generating guided waves in the cladding tubes of fuel rods within a fuel assembly without need to disassemble the fuel assembly. Comb transducers can be manufactured with varying degrees of spacing and element thickness to generate the desired mode in a variety of material thickness and properties.

An advantage of a comb type of transducer is that it can be made relatively thin and still maintains its characteristics. Due to its small thickness, the comb transducer is the best practical method of introducing guided waves into fuel rods within an assembly. To test a fuel rod within an assembly, the transducer must pass between the small gaps (.072 inch or 1.9 mm fuel rod to guide tube) to test interior rods.

The comb transducer is designed to produce guided waves in the fuel rod cladding that have a longitudinal phase velocity that is "non-leaky" to both the fuel rod cladding tube inner surface and outer surface, i.e. the guided wave remains within the cladding wall. This provides for maximum sensitivity and minimum attenuation. The transducer operating frequency is selected to produce circumferential sound field intensities that are maximum at desired inspection points (normally at 135° to possible transducer presentation paths). Transducer parameters (operating frequency, distance between the "teeth" of the comb transducer, etc.) can be modified to cause the sound field to be at virtually desired any inspection point (i.e. axial position along the fuel rod).

In tubes, both axisymmetric and non-axisymmetric guided waves can propagate. Axisymmetric guided waves refer to modes where the particle motion is only in longitudinal and radial directions and have uniform distributions of stress and particle motion around the tube. This can be accomplished by using a fully encircling comb transducer. Non-axisymmetric guided waves have torsional components as well as longitudinal and radial components to the particle motion and have non-uniform distribution of stress and particular motion around the tube.

There are two inspection modes utilizing comb type transducers, "loaded" and "partially loaded". In a loaded application, the transducer fully surrounds the outer surface of the fuel rod (i.e. the outer surface) of the cladding tube (or the inner diameter for applications such as in steam generator tubes). This is the optimum test in that the transducer generates a uniform (axisymmetric) sound field that travels in both directions (i.e. axially and circumferentially) in the tube and gives the maximum sensitivity. In a partially loaded test, only a segment of the transducer contacts the test object. This is less than optimum in that it produces a non-axisymmetric sound field circumferentially and axially along the tube. This non-axisymmetric sound field has limited inspection value due to the nonuniformity of the sound field at any specific location. Because of the very limited access to the fuel rods within a nuclear fuel assembly, only partial loading sources can be used such as a section of a comb transducer which will product non-axisymmetric waves. This is not a problem because the transducer physical characteristics (e.g. number of comb teeth, loading area etc.,) and fundamental frequency parameters can be optimized to generate the maximum sound field at the desired location. Changes to the location and intensity of the sound field are most sensitive to frequency changes.

The method of inspecting nuclear fuel rods to detect failure or a breach in the fuel rod cladding comprises using a partially loaded, tone burst activated, comb transducer that is passed through the rod-to-rod gaps of a fuel assembly. By selecting the comb gaps and thickness, the transducer produces a field intensity at a specific axial and circumferential distance along the fuel rod. In a particular case, the circumferential distance could be selected to be at 90° to the sound entry point to account for the spring location relative to the available probe entry path.

Sound field characteristics are heavily dependent on frequency, when the properties of the test object are constant such as in nuclear fuel rod cladding tubes. To further increase the effectiveness of the inspection technique, the tone burst excitation would be "swept" through a specific frequency band causing the sound field to change in intensity circumferentially around the fuel rod being inspected. The use of a swept frequency tone burst generator as a transducer excitation source permits the entire region of the fuel rod within the spacer cell to be inspected from one location without the need for generating axisymmetric waves from a fully encircling comb transducer. Use of such a fully encircling comb transducer would require the disassembly of the fuel assembly in order to place the fuel rod through the encircling comb transducer. Defects within the fuel rod cladding would reflect part of the guided wave signal which would be received by the comb transducer operating in the pulse-echo mode. The amplitude of the reflected signal is proportional to the facial area of the defect. Thus, the use of swept frequency would permit the sound field to inspect a full 360° of the fuel rod by the sound field changing in accordance with the sweep frequency.

In another method, the comb transducer would be inserted into the spaces between the fuel rods, at a specified distance above or below a spacer. The transducer would be pulsed at repetition rate. When the transducer is positioned normal to the fuel rod, maximum loading will be achieved on a fuel rod, the injected signal travels up and down the fuel rod, producing sound field intensities at the desired inspection point(s) as determined by the transducer physical characteristics. Because the guided wave produced in the fuel rod cladding tube is non-leaky, it is most sensitive to wear, defects or other changes in only the cladding wall. Portions of the sound wave are reflected for example by any change in the wall-to-wall thickness such as would be produced by a fretting mark. The reflected signal is received by the transmitting transducer and transmitted to and processed by the ultrasonic instrument. The transducer would then continue to be positioned through the assembly while data was gathered from each fuel rod. Each fuel rod in the assembly is inspected in this manner.

The ultrasonic testers can be either tone burst or shock excitation (all testing has been done with tone burst. The positioning system can be a standard X-Y table for underwater use.

## Failed Fuel Rod Detection Using Guided Waves

The use of guided waves (described above) greatly enhances the probability of that the ultrasonic technique will detect water in the fuel rod. In the above-mentioned embodiment of the present invention, the frequency was purposely chosen to ensure that the sound was not "leaky" to either the outer or inner cladding tube surfaces, as water rapidly attenuates the sound field. In this embodiment the frequency is chosen so the wave is primarily leaky to the inner wall of the cladding tube. In this way, any water will rapidly attenuate the sound field and will indicate the presence of water whereas "air" will not (differences in acoustic impedances).

The technique of using guided waves for fuel rod inspection to detect wear, defects, or other changes in the fuel rod cladding tube wall can, in accordance the present invention, be extended to failed fuel detection. The operating characteristics of the comb transducer is changed so that the injected signal is "leaky" (easily attenuated) on the cladding tube inner wall by a clad-water interface, since water in the fuel rod is an indicator of failure. Secondly, a receiving transducer (either a comb or non-comb) can be used in addition utilized and which can be located either on the same side of the fuel rod as the transmitting transducer or on the opposite side. The amplitude of the received signal is indicative of the soundness of the fuel rod. A high amplitude signal indicates no water in the fuel rod. Alternatively, a single probe transducer system is used by evaluating the amplitude of the reflection of the guided wave from the fuel rod lower end cap. High amplitude of the reflected wave indicates that the fuel rod has not failed.

The advantage of the present invention over prior art ultrasonic techniques to determine whether the cladding tube of a fuel rod has failed, is that a much larger area of cladding tube inner wall can be interrogated for the presence of water making it more likely to detect failures. Prior art ultrasonic methods at best only test a very small portion of the fuel rod, from 0.060 to 0.100 square inches (i.e. 0.1 inch in axial height). In prior art techniques, only a single spot 0.030 to 0.12 square inches for a full circumferential scan is interrogated. The present invention permits testing of the fuel cladding tube inner wall area over a 6 inch axial height of the fuel rod. This greatly increases the possibility of positively detecting water in a failed fuel rod. Because the comb transducer is only partially loaded producing a non-axisymmetric sound field that travels in the fuel rod from the position of the transducer to the end cap of the fuel rod, the area of the cladding tube inner wall that is interrogated increases by at least an order of magnitude.

In accordance with another method of the present invention, a comb transducer is placed in the center of the span above the lowest spacer of a fuel assembly and which transmits ultrasonic guided waves which travel down to and are reflected off the lower end cap weld of the fuel rod being inspected; and the reflected ultrasonic signal is received by the comb transducer where the amplitude of the reflected signal is an indication of water in the fuel rod.

In accordance with another aspect of the present invention, an apparatus for the detection of nuclear fuel rod wear or fuel rod failure is provided for which comprises a "comb" style ultrasonic transducer to produce guided waves; an ultrasonic tester; and a transducer positioning system. More specifically, the comb transducer is mounted on a delivery system, an X-Y table positions the transducers within the fuel assembly, and an ultrasonic flaw detector receives and displays the ultrasonic signal received from the fuel rod. A sweep frequency generator drives the transducer, and a power amplifier amplifies the output of the sweep frequency generator.

**Test Results**

Experiments were carried out using a tone burst system and variable angle transducer to generate non-axisymmetric guided waves in fuel rod tube samples. The tone burst system provides a high voltage, gated, sinusoidal pulse that fires the transducer with a narrow frequency spectrum. The narrow spectrum is particularly important in that it allows the selection of single modes from the dispersion curves. The frequency of the transducer can be changed such that different portions of the dispersion curve can be excited.

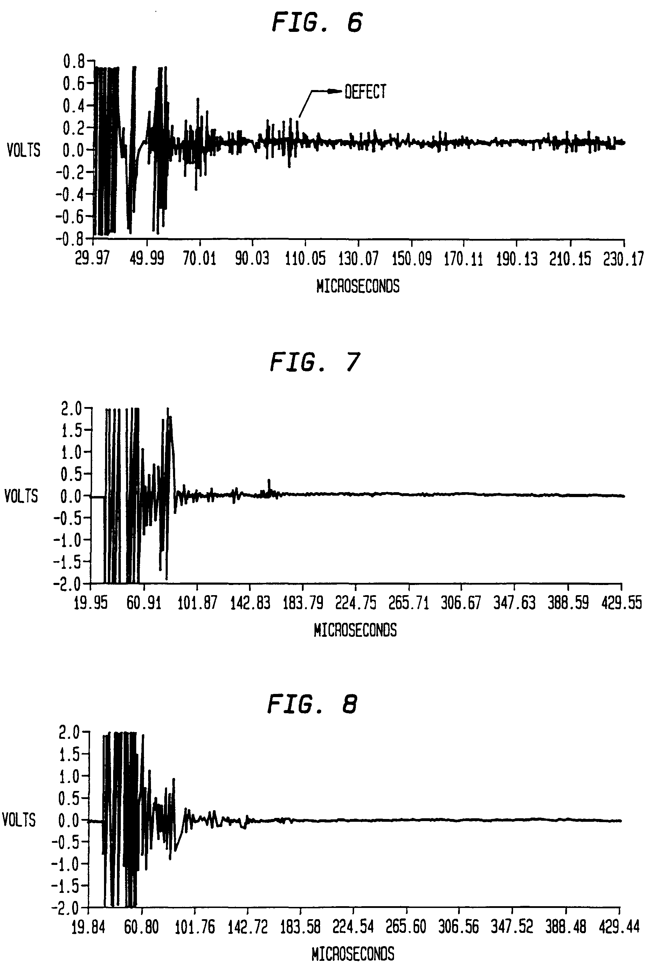

In these test, segments of nuclear fuel rod cladding tubes having defects, marring, or wear (without nuclear fuel) were plugged at either one or at both ends and submersed in a water bath. Modes were chosen by an experimental and theoretical basis from the dispersion curves. A mode with sensitivity to all defect samples and with adequate signal to noise ratio was determined by these tests. Initially, a 3rd order, non-axisymmetric mode at a frequency of 5.18 MHz was found with adequate sensitivity and signal to noise ratio to perform the inspection. Experimental results with the transducer at 3" and 0 degrees with respect to the defect position is shown in Figure 6 in which the defect was detected. In Figure 6, for the .025" defect, the cladding tube was water loaded internally as well as externally.

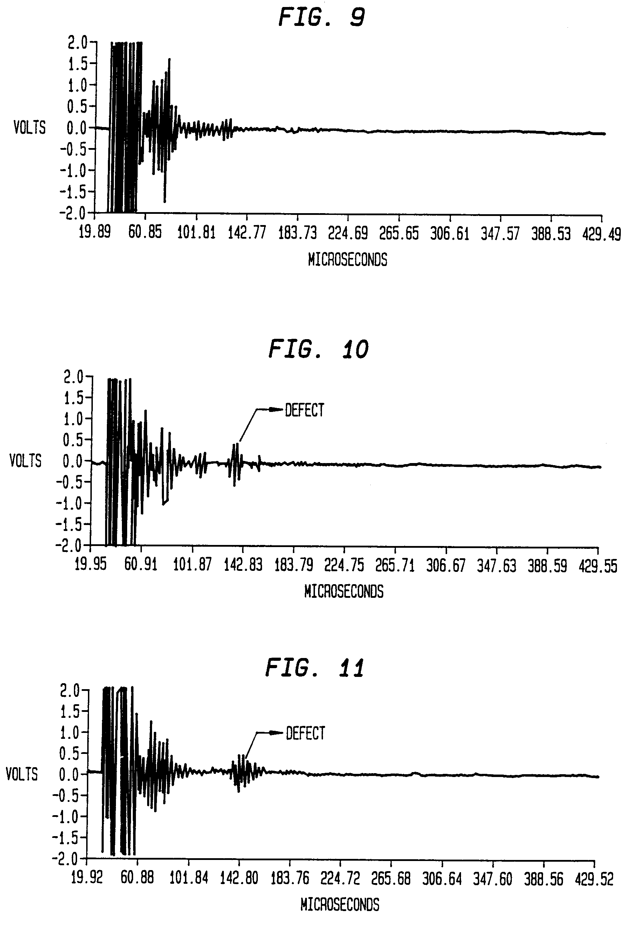

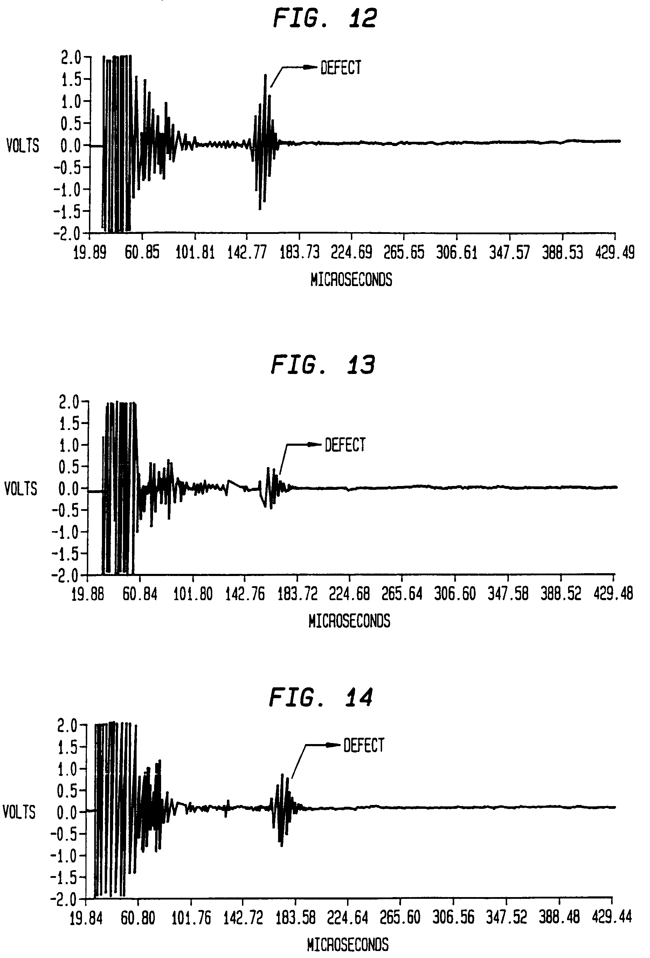

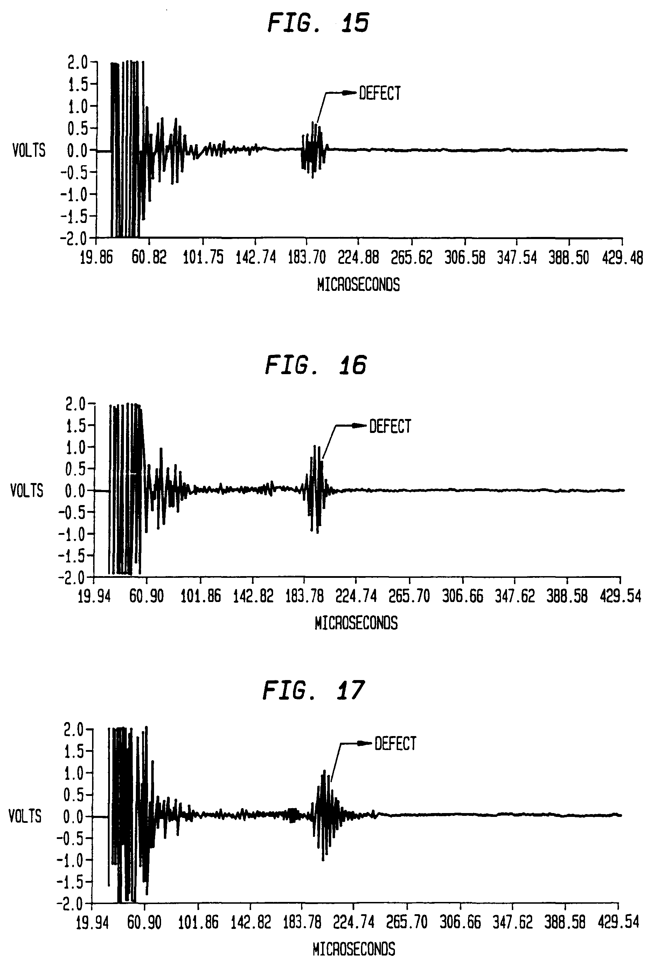

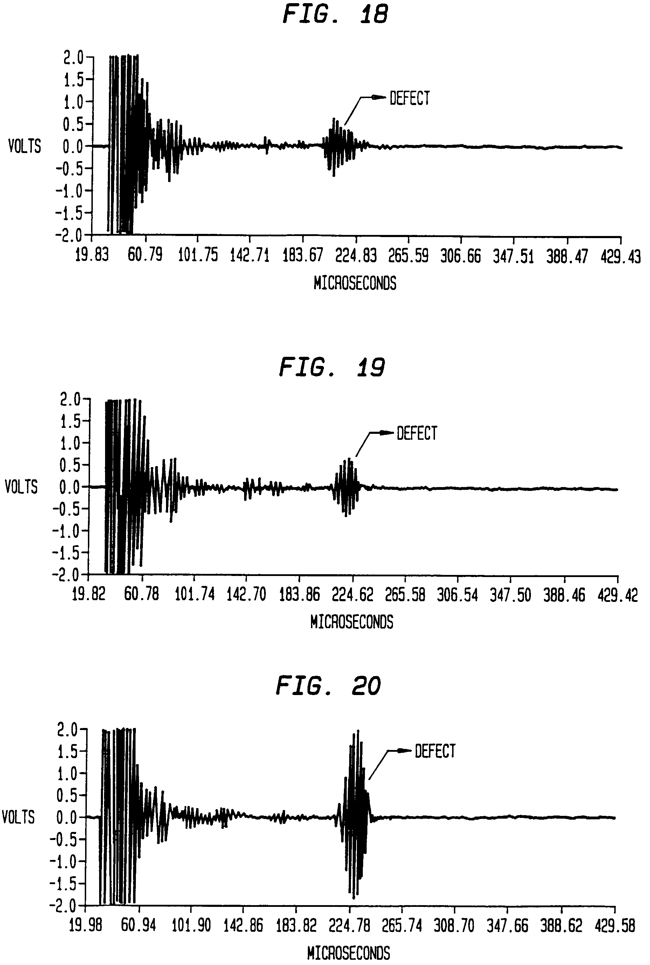

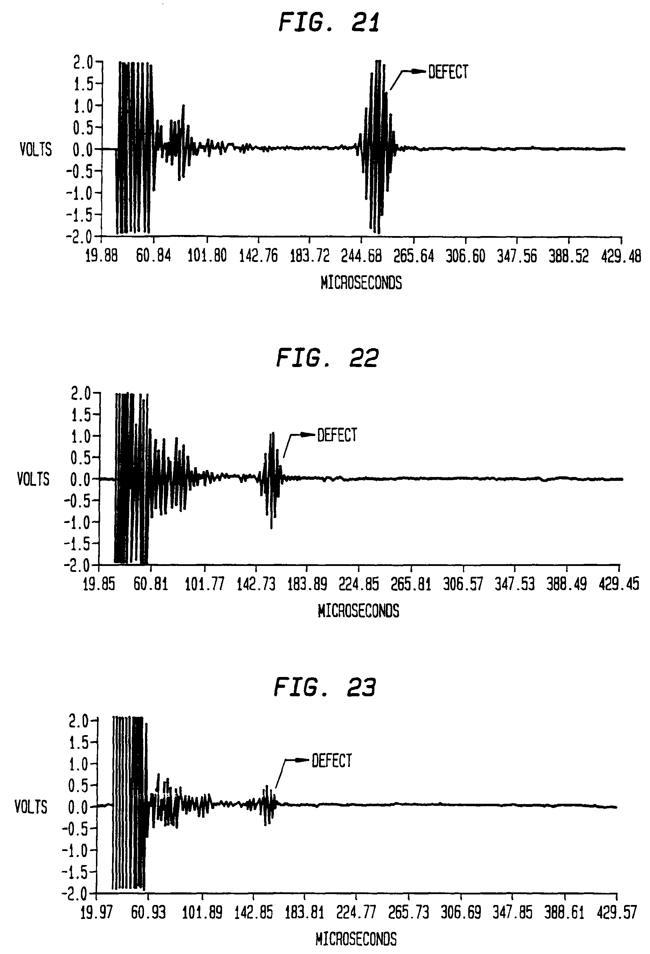

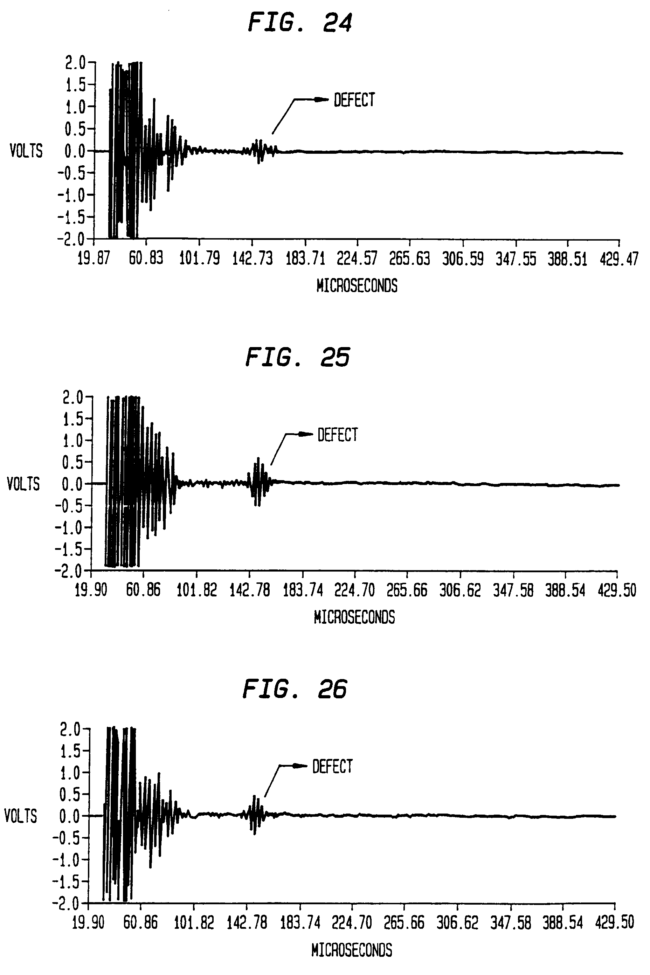

Additional results are shown in Figures 7-26 which demonstrates the affect of nonaxisymmetric modes on detection sensitivity. These results are for 37 degree generation angle, and 4.67 MHz. All waveforms are for the .010" defect. Figures 7-21 show the variation in sensitivity as the transducer is incremented longitudinally (i.e. axially) away from the defect. Figures 22-26 show the variation in sensitivity as the transducer is incremented circumferentially around the tube at a single longitudinal position.

While the foregoing description and drawings represent the preferred embodiments of the present invention, it will be apparent to those skilled in the art that various changes and modifications may be made therein without departing from the true spirit and scope of the present invention.

**Claims**

1. A method for ultrasonic inspection of a nuclear fuel rod in a nuclear fuel assembly having an array of spaced apart parallel nuclear fuel rods immersed in a compressible fluid, the nuclear fuel rod having a cladding tube surrounding an inner core of nuclear fuel, said cladding tube having an inner wall, comprising the steps of:

   transmitting ultrasonic guided waves in the cladding tube;

   detecting a reflected ultrasonic wave from the cladding tube which reflected ultrasonic guided wave is indicative of the presence of water in the fuel rod and represents a breach in the integrity of the wall of the cladding tube.

2. The method of claim 1 wherein the step of transmitting ultrasonic guided waves is from a comb transducer.

3. The method of claim 2 wherein the step of detecting a reflected ultrasonic guided wave from the cladding tube is by a receiving transducer.

4. The method of claim 2 wherein the ultrasonic guided waves that are transmitted by the comb transducer are leaky to the cladding tube inner wall.

5. The method of claim 4 wherein the ultrasonic guided waves are non-axisymmetric.

6. The method of claim 5 wherein the ultrasonic guided waves are transmitted by a partially loaded comb transducer.

7. The method of claim 6 wherein the ultrasonic guided waves are transmitted by the comb transducer from a swept frequency tone burst signal.

8. The method of claim 7 wherein the step of detecting the reflected ultrasonic guided wave from the cladding tube is performed by an ultrasonic flaw detector.

9. A method for ultrasonic inspection of a nuclear fuel rod in a nuclear fuel assembly having an array of spaced apart parallel nuclear fuel rods immersed in a compressible fluid, the nuclear fuel rod having a cladding tube surrounding an inner core of nuclear fuel, said cladding tube having an inner wall, comprising the steps of:

   transmitting ultrasonic guided waves in the cladding tube which leaks the ultrasonic guided waves from the inner wall into the inner core;

   detecting a reflected ultrasonic wave from the cladding tube which reflected ultrasonic guided wave is indicative of the presence of water in the fuel rod and represents a breach in the integrity of the wall of the cladding tube.

10. The method of claim 9 wherein the step of transmitting ultrasonic guided waves is from a comb transducer.

11. The method of claim 10 wherein the step of detecting a reflected ultrasonic guided wave from the cladding tube is by a receiving transducer.

12. The method of claim 10 wherein the ultrasonic guided waves are non-axisymmetric.

13. The method of claim 12 wherein the ultrasonic guided waves are transmitted by a partially loaded comb transducer.

14. The method of claim 13 wherein the ultrasonic guided waves are transmitted by the comb transducer from a swept frequency tone burst signal.

15. The method of claim 14 wherein the step of detecting the reflected ultrasonic guided wave from the cladding tube is performed by an ultrasonic flaw detector.

16. An apparatus for ultrasonic inspection of a nuclear fuel rod in a nuclear fuel assembly having an array of spaced apart parallel nuclear fuel rods immersed in a compressible fluid, the nuclear fuel rod having a cladding tube surrounding an inner core of nuclear fuel, said cladding tube having an inner wall, comprising:

a comb ultrasonic transducer for transmitting ultrasonic guided waves in the cladding tube;

an ultrasonic testor for receiving a reflected ultrasonic wave from the cladding tube which reflected ultrasonic guided wave is indicative of the presence of water in the fuel rod; and a transducer positioning member for positioning the transducer within the fuel assembly.

17. A method for ultrasonic inspection of a nuclear fuel rod in a nuclear fuel assembly having a plurality of spacer grids through which fuel rods pass in an array of spaced apart parallel nuclear fuel rods immersed in a compressible fluid, the nuclear fuel rod having a cladding tube surrounding an inner core of nuclear fuel, said cladding tube having an inner wall, comprising the steps of:

(a) positioning a comb transducer in the interior of the span between a lower-most spacer and an adjacent spacer and above the lowermost spacer;

(b) transmitting ultrasonic guided waves in the cladding tube which guided waves travel down in the cladding tube and reflected of a lower end cap weld of the fuel rod;

(c) detecting a reflected ultrasonic wave from the lower end cap of the fuel rod where the amplitude of the reflected ultrasonic wave is indicative of the presence of water in the fuel rod.

## FIG. 1

## FIG. 2

PHASE VELOCITY (mm/usec)

F-D PRODUCT (MHz mm)

- L (0, 1)
- L (0, 2)
- L (0, 3)
- L (0, 4)
- L (0, 5)
- L (0, 6)
- L (0, 7)
- L (0, 8)
- L (0, 9)

## FIG. 3

GROUP VELOCITY (mm/usec) vs F-D PRODUCT (MHz mm)

Legend:
— L (0, 1)
— L (0, 2)
—·—· L (0, 3)
— L (0, 4)
— L (0, 5)
— L (0, 6)
— L (0, 7)
— L (0, 8)
— L (0, 9)

## FIG. 4A

PHASE VELOCITY (mm/microsec) vs F-D PRODUCT (MHz mm)

## FIG. 4B

GROUP VELOCITY (mm/microsec)

F-D PRODUCT (MHz mm)

s/d=slope=m

## FIG. 5

SPATIAL PERIOD, s

WAVELENGTH, $\lambda$

EP 0 936 630 A1

## FIG. 6

DEFECT

VOLTS

```
  0.8
  0.6
  0.4
  0.2
  0.0
 -0.2
 -0.4
 -0.6
 -0.8
   29.97  49.99  70.01  90.03 110.05 130.07 150.09 170.11 190.13 210.15 230.17
```

MICROSECONDS

## FIG. 7

VOLTS

```
  2.0
  1.5
  1.0
  0.5
  0.0
 -0.5
 -1.0
 -1.5
 -2.0
   19.95  60.91 101.87 142.83 183.79 224.75 265.71 306.67 347.63 388.59 429.55
```

MICROSECONDS

## FIG. 8

VOLTS

```
  2.0
  1.5
  1.0
  0.5
  0.0
 -0.5
 -1.0
 -1.5
 -2.0
   19.84  60.80 101.76 142.72 183.58 224.54 265.60 306.56 347.52 388.48 429.44
```

MICROSECONDS

12

## FIG. 9

## FIG. 10

## FIG. 11

13

## FIG. 12

## FIG. 13

## FIG. 14

## FIG. 15

## FIG. 16

## FIG. 17

## FIG. 18

## FIG. 19

## FIG. 20

## FIG. 21

## FIG. 22

## FIG. 23

## FIG. 24

## FIG. 25

## FIG. 26

European Patent
Office

**EUROPEAN SEARCH REPORT**

Application Number

EP 99 10 1619

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br>Y | US 4 684 493 A (GRAVELLE ALAIN)<br>4 August 1987<br>* column 1, line 7-18 *<br>* column 2, line 14-65 *<br>* column 4, line 54 - column 5, line 2 *<br>* column 6, line 31-65; figures 1,8-10 *<br>* column 2 * | 1-7,<br>9-14,16<br>17 | G21C17/07 |
| Y<br><br>A | US 4 193 843 A (JESTER ALFRED ET AL)<br>18 March 1980<br>* column 2, line 22-39; figures 1,3,4,6 * | 17<br><br>1,3-5,9,<br>11,16 | |
| A | US 4 366 711 A (WEILBACHER JEAN-CLAUDE ET AL) 4 January 1983<br>* column 3, line 32 - column 4, line 68 * | 1,3,5-9,<br>14-17 | |
| A | PATENT ABSTRACTS OF JAPAN<br>vol. 015, no. 384 (P-1258),<br>27 September 1991<br>& JP 03 154861 A (MITSUBISHI HEAVY IND LTD), 2 July 1991<br>* abstract * | 1,4,5,8,<br>9,12,<br>15-17 | TECHNICAL FIELDS SEARCHED (Int.Cl.6)<br><br>G21C |

The present search report has been drawn up for all claims

| Place of search | Date of completion of the search | Examiner |
|---|---|---|
| THE HAGUE | 19 May 1999 | Jandl, F |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

EP 0 936 630 A1

## ANNEX TO THE EUROPEAN SEARCH REPORT
## ON EUROPEAN PATENT APPLICATION NO.

EP 99 10 1619

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-1999

| Patent document cited in search report | | Publication date | Patent family member(s) | | Publication date |
|---|---|---|---|---|---|
| US 4684493 | A | 04-08-1987 | FR | 2538155 A | 22-06-1984 |
| | | | EP | 0115231 A | 08-08-1984 |
| | | | JP | 1754680 C | 23-04-1993 |
| | | | JP | 4047798 B | 04-08-1992 |
| | | | JP | 59214793 A | 04-12-1984 |
| | | | YU | 244383 A | 30-06-1991 |
| | | | ZA | 8309194 A | 30-01-1985 |
| US 4193843 | A | 18-03-1980 | DE | 2605962 A | 18-08-1977 |
| | | | AT | 360126 B | 29-12-1980 |
| | | | AT | 955976 A | 15-05-1980 |
| | | | BE | 851280 A | 31-05-1977 |
| | | | CA | 1091339 A | 09-12-1980 |
| | | | CH | 604324 A | 15-09-1978 |
| | | | DE | 2659555 A | 06-07-1978 |
| | | | FR | 2341183 A | 09-09-1977 |
| | | | GB | 1541761 A | 07-03-1979 |
| | | | JP | 1105973 C | 30-07-1982 |
| | | | JP | 52098894 A | 19-08-1977 |
| | | | JP | 56050239 B | 27-11-1981 |
| | | | SE | 434583 B | 30-07-1984 |
| | | | SE | 7701422 A | 15-08-1977 |
| US 4366711 | A | 04-01-1983 | FR | 2454675 A | 14-11-1980 |
| | | | EP | 0018290 A | 29-10-1980 |
| | | | JP | 56000650 A | 07-01-1981 |
| | | | ZA | 8002361 A | 29-04-1981 |

EPO FORM P0459

For more details about this annex : see Official Journal of the European Patent Office, No. 12/82

20